# EUROPÄISCHE PATENTANMELDUNG

(11) **EP 1 224 966 A2**
(43) Veröffentlichungstag der Anmeldung: **24.07.2002**
(21) Anmeldenummer: 02001239.9
(22) Anmeldetag: 17.01.2002
(51) Int. Cl.: B01F 3/04, A23L 2/54

(54) **Verfahren und Vorrichtung zum Erzeugen einer mit Gas angereicherten Flüssigkeit, insbesondere eines mit Kohlensäure und Sauerstoff angereicherten Getränks, Behälter und Getränk**

(30) Priorität: 18.01.2001 DE 10102158
(71) Anmelder: NTS GmbH, 28239 Bremen (DE)
(72) Erfinder: Kurzer, Frank, 27711 Osterholz-Scharmbeck (DE)
(74) Vertreter: Eisenführ, Speiser & Partner

(57) **Zusammenfassung**

Die Erfindung betrifft ein Verfahren und eine Vorrichtung zum Erzeugen einer mit Gas angereicherten Flüssigkeit, insbesondere eines mit Kohlensäure und Sauerstoff angereicherten Getränks, mit folgenden Schritten: Einbringen der Flüssigkeit in einen Behälter: druckdichtes Verbinden des Behälters mit zwei Gasquellen; Einbringen der unter Druck stehenden Gase in den Behälter; und Vermischen der Flüssigkeit mit den Gasen im Behälter.

## Beschreibung

Die Erfindung betrifft ein Verfahren zum Erzeugen einer mit Gas angereicherten Flüssigkeit. Die Flüssigkeit wird in einen Behälter eingebracht. Der Behälter wird mit einer Gasquelle verbunden, und unter Druck stehendes Gas in den Behälter eingebracht.

Die Erfindung betrifft ferner eine Vorrichtung zum Erzeugen einer mit Gas angereicherten Flüssigkeit. In einer Gasquelle wird unter Druck stehendes Gas bereitgestellt. Mit einer mit der Gasquelle druckdicht verbindbaren Vorrichtung wird ein die Flüssigkeit enthaltender Behälter aufgenommen.

Eine Vorrichtung und ein Verfahren zum Lösen von Kohlensäure (CO₂) in Wasser wird kommerziell unter der Bezeichnung "SodaStream" vertrieben. Das CO₂ wird mittels eines mit Kohlensäure gefüllten Zylinders oder Druckbehälters bereitgestellt.

Bei Bestätigung eines Betätigungsschalters strömt CO₂ über ein sich in den Innenraum des Flüssigkeits-Behälters und des darin aufgenommenen Wassers erstrekkendes Düsenelement mit darin angeordneten Öffnungen in das Wasser.

Seit einiger Zeit ist es auch bekannt, Wasser mit Sauerstoff (O₂) anzureichern. Der Konsum derartigen Wassers soll die Leistungsfähigkeit des Menschen steigern.

Der Erfindung liegt die Aufgabe zugrunde, ein Verfahren und eine Vorrichtung zum Erzeugen einer Flüssigkeit bereitzustellen, die mehrere vorzugsweise gelöste Bestandteile enthält. Gemäß eines Aspektes der Erfindung besteht die Aufgabe, eine Vorrichtung bereitzustellen, mit der eine möglichst gute und effiziente Durchmischung eines Gases und einer Flüssigkeit erreicht wird. In einem weiteren Aspekt befasst sich die Erfindung mit der Aufgabe, für eine Vorrichtung zum Erzeugen einer angereicherten Flüssigkeit, insbesondere eines Getränks, eine einfach herzustellende und zu bedienende Haltevorrichtung für einen Gas-Druckbehälter bereitzustellen, insbesondere einen Sauerstoff-Druckbehälter. Schließlich besteht die Aufgabe, einen an eine derartige Haltevorrichtung angepassten Behälter, insbesondere O²-Druckbehälter bereitzustellen.

Die Erfindung löst die Aufgabe gemäß eines ersten Aspektes mit einem Verfahren mit den Merkmalen des Anspruchs 1: Verfahren zum Erzeugen einer mit Gas angereicherten Flüssigkeit, insbesondere eines mit Kohlensäure und Sauerstoff angereicherten Getränks, mit folgenden Schritten: Einbringen der Flüssigkeit in einen Behälter: druckdichtes Verbinden des Behälters mit zwei Gasquellen; Einbringen der unter Druck stehenden Gase in den Behälter; und Vermischen der Flüssigkeit mit den Gasen im Behälter.

Mit dem erfindungsgemäßen Verfahren kann auf einfache Weise eine mit mehreren zunächst gasförmigen Bestandteilen angereicherte Flüssigkeit erzeugt werden, insbesondere ein mit CO₂ und O₂ angereichertes Getränk, und besonders bevorzugt mit O₂ und CO₂ angereichertes Wasser. Hierzu wird zunächst die anzureichernde Flüssigkeit in einen Behälter eingefüllt. Dann wird der Behälter druckdicht mit zwei unterschiedlichen Gasquellen für unterschiedliche Gase, besonders bevorzugt CO₂ und O₂ verbunden. Die Gase werden gleichzeitig oder besonders bevorzugt nacheinander dadurch in den Behälter eingeleitet, dass eine Verbindung zwischen der Gasquelle mit dem Behälter hergestellt wird. Schließlich werden die Gase entweder bereits während der Einleitung oder anschließend mit der Flüssigkeit in dem Behälter vermischt. Erfindungsgemäß lässt sich auf einfache Weise eine Anreicherung vornehmen und insbesondere ein wohlschmeckendes Getränk herstellen. Insbesondere bei der erfindungsgemäßen Verwendung von CO₂ und O₂ zum Anreichern von Wasser lässt sich durch das in dem Wasser in relativ hoher Konzentration vorliegende O₂ die Leistungsfähigkeit des Menschen durch den Konsum derartigen Wassers steigern, während durch die Anreicherung des Wassers mit CO₂ einerseits in vorteilhafter Weise eine bessere Haltbarkeit des Wassers und auch eine Geschmacksabrundung und der häufig gewünschte Sprudeleffekt erreicht.

Das erfindungsgemäße Verfahren wird in besonders bevorzugter Weise dadurch weitergebildet, dass zunächst aus einer ersten, als Druckbehälter ausgebildeten Gasquelle Sauerstoff in den Flüssigkeits-Behälter eingebracht wird und anschließend aus einer als Druckbehälter ausgebildeten Gasquelle Kohlensäure in den Behälter eingeleitet wird. Es ist gefunden worden, dass eine sukzessive Einbringung eines ersten Gases, besonders bevorzugt Sauerstoff und eine anschließende Einbringung eines weiteren Gases, besonders bevorzugt Kohlensäure in die in dem Behälter befindliche Flüssigkeit Vorteile aufweist, die darin bestehen, dass der Sauerstoff mit einem ersten, höheren Druck eingebracht werden kann, so dass aufgrund einer höheren Partialdruckdifferenz sich eine relativ hohe O²-Konzentration in der Flüssigkeit erreichen lässt. Anschließend kann mit einem geringeren Druck CO² aus dem Druckbehälter in den Flüssigkeits-Behälter eingeleitet werden. Bei einer gleichzeitigen Verbindung der Gasquellen mit dem Behälter könnte es in nachteiliger Weise zu einem unerwünschten Druckausgleich zwischen den beiden Gasquellen, die unterschiedliche Drücke aufweisen können, kommen. Dies wird verfahrensgemäß vermieden. Gemäß einer weiteren bevorzugten Ausführungsform wird vorgeschlagen, dass die Gase mittels einer Gas-Flüssigkeitsstrahldüse unmittelbar in die in dem Behälter befindliche Flüssigkeit eingeleitet werden. Mittels einer derartigen Düse können die Gase mit hoher Strömungsgeschwindigkeit in die Flüssigkeit eingeleitet werden, so dass es zu einer starken Durchmischung kommt, die den Stofftransport, d. h. die Lösung der anzureichernden Bestandteile in der Flüssigkeit deutlich verbessert.

Besonders bevorzugt ist es ferner, dass zunächst das erste Gas unter Druck in den Behälter eingeleitet wird, dann der Druck in dem Behälter aufrecht erhalten bleibt und im Anschluss hieran das zweite Gas unter Druck in den Behälter eingeleitet wird. Dadurch das der Druck nach dem Einbringen des ersten Gases aufrecht erhalten bleibt, kommt es nicht zu einer Entmischung, d. h. einem unerwünschtem Ausgasen oder eine Verflüchtigung des gelösten Gases aus der Flüssigkeit. Stattdessen bleibt die Konzentration des gelösten Bestandteils erhalten, und es wird dann das zweite Gas unter Druck in den Behälter eingeleitet. Besonders bevorzugt wird zunächst O₂ eingeleitet, dann die Verbindung der O₂-Gasquelle unterbrochen, während der Druck in dem Flüssigkeits-Behälter aufrecht erhalten bleibt, und es wird im Anschluss hieran CO₂ in den Flüssigkeits-Behälter eingeleitet. Der Druck in dem Behälter bleibt also während des Vorgangs erhalten. Vorzugsweise bleibt der Druck im Behälter solange bestehen bis ein mechanisches Entlastungsventil betätigt wird. Aus Sicherheitsgründen ist vorzugsweise vorgesehen, dass der Behälter erst nach Betätigung des mechanischen Entlastungsventils und somit einen Druckausgleich gegenüber der Umgebung entnommen werden kann.

Besonders bevorzugt ist es, dass die Flüssigkeit Trinkwasser, Fruchtsaft oder dgl. ist und Sauerstoff und Kohlensäure eingeleitet werden, so dass sich diese in dem Wasser oder Fruchtsaft lösen.

Gemäß einer Weiterbildung des Verfahrens wird vorgeschlagen, dass ein Druckbehälter mit Sauerstoff gefüllt wird und ein weiterer Druckbehälter mit Kohlensäure gefüllt wird, beide gefüllten Druckbehälter an einer Vorrichtung zum Herstellen eines mit Kohlensäure und Sauerstoff anzureichernden Getränkes befestigt werden, zunächst Sauerstoff aus dem Druckbehälter in einen an der Vorrichtung befestigten Behälter unter Druck eingeleitet wird, anschließend durch Betätigung von Ventilmitteln Kohlensäure in den unter Druck stehenden Behälter eingeleitet wird, so dass sich Sauerstoff und Kohlensäure in der Flüssigkeit lösen, und anschließend der Behälter von der Vorrichtung entnommen wird und nach Entleeren der Druckbehälter diese von der Vorrichtung entnommen werden und erneut mit Sauerstoff bzw. Kohlensäure befüllt werden. Diese Weiterbildung ermöglicht eine kontinuierliche Wiederverwendung der Gas-Druckbehälter, die nach dem Einsatz beim Konsumenten, der selbst das erfindungsgemäße Verfahren im Heimbetrieb durchführen kann. Dann kann eine erneute Befüllung bei einem Abfüller vorgenommen werden. Anschließend können die gefüllten Gas-Druckbehälter erneut an Konsumenten geliefert werden.

Die Erfindung löst die Aufgabe ferner mit einer Vorrichtung mit dem Merkmalen gemäß Anspruch 9: Vorrichtung zum Erzeugen einer mit Gas angereicherten Flüssigkeit, insbesondere eines mit Kohlensäure und Sauerstoff angereicherten Getränks und zur Durchführung eines Verfahrens nach einem der vorstehenden Ansprüche, mit einer Gasquelle zum Bereitstellen eines unter Druck stehenden Gases; einer mit der Gasquelle druckdicht verbindbaren Vorrichtung zur Aufnahme eines die Flüssigkeit enthaltenden Behälters; und mit einer weiteren Gasquelle für ein weiteres Gas vorgesehen ist, die druckdicht mit der Vorrichtung zur Aufnahme des die Flüssigkeit enthaltenden Behälters verbindbar ist, und mit Ventilmitteln wahlweise aus der einen Gasquelle und/oder der weiteren Gasquelle Gas in den Behälter einleitbar ist.

Eine derartige erfindungsgemäße Vorrichtung dient allgemein zum Erzeugen einer mit zunächst gasförmigen Komponenten angereicherten Flüssigkeit und besonders bevorzugt zur Herstellung eines Getränks, insbesondere eines Wassers, welches mit CO₂ und O₂ angereichert ist. Eine solche Vorrichtung ist insbesondere im Heimbetrieb bei Endverbrauchern auf einfache Weise einsetzbar. Erfindungsgemäß weist eine derartige Getränkezubereitungsvorrichtung erstmals zwei Gasquellen für unterschiedliche Gase auf, vorzugsweise für O₂ und CO₂, so dass ein erfindungsgemäßes Getränk hergestellt werden kann, welches je nach eingesetzten Gasen unterschiedliche Eigenschaften aufweist. Durch Anreicherung eines Getränks mit Sauerstoff lässt sich die Leistungen eines Menschen steigern, während CO₂ einen gewünschten Sprudeleffekt und eine Geschmacksabrundung bewirkt. Die erfindungsgemäßen Ventilmittel ermöglichen es, dass wahlweise aus der einen und/oder anderen Gasquelle die Gase einleitbar sind. Besonders bevorzugt ist es, dass die Gase nacheinander durch entsprechende Steuerung der Ventilmittel in den Behälter und somit die Flüssigkeit eingeleitet werden; insoweit wird auf die obige Beschreibungen des erfindungsgemäßen Verfahrens Bezug genommen, deren Vorteile gleichermaßen für die erfindungsgemäße Vorrichtung gelten.

Gemäß eines weiteren Aspektes der Erfindung wird die Aufgabe gelöst mit einer Vorrichtung mit den Merkmalen des Anspruchs 10: Vorrichtung zum Erzeugen einer mit Gas angereicherten Flüssigkeit, insbesondere eines mit Kohlensäure und Sauerstoff angereicherten Getränks und zur Durchführung eines Verfahrens nach einem der vorstehenden Ansprüche, mit einer Gasquelle zum Bereitstellen eines unter Druck stehenden Gases; einer mit der Gasquelle druckdicht verbindbaren Vorrichtung zur Aufnahme eines die Flüssigkeit enthaltenden Behälters; und einer mit der Gasquelle verbindbaren Gas-Flüssigkeitsstrahldüse, welche eine Gasaustrittsöffnung, aus der ein Gastrahl austritt, und ein Gehäuse aufweist, in dem mindestens ein Flüssigkeitskanal ausgebildet ist, in welchen die Flüssigkeit aufgrund des Gasstrahls eingesaugt wird, so dass das Gas mit der Flüssigkeit vermischt wird.

Eine derartige Vorrichtung ermöglicht eine besonders intensive Durchmischung des Gases mit einer Flüssigkeit. Das Prinzip der Vorrichtung besteht darin, dass aufgrund eines durch die Düse ausströmenden Gases aus einer Gasquelle ein Gasstrahl gebildet wird, der in die Flüssigkeit einströmt. Der Gasstrahl reißt Flüssigkeit mit und aufgrund des Gehäuses wird Flüssigkeit durch den Flüssigkeitskanal eingesaugt und das Gas mit der Flüssigkeit vermischt. Dabei kommt es zu einem Effekt, der mit dem in einer sogenannten Flüssigkeits- oder Wasserstrahlpumpe vergleichbar ist. Das Gas strömt als Treibstrom durch die Flüssigkeitsstrahldüse, die unterhalb der Oberfläche der Flüssigkeit im Behälter angeordnet ist. Dann strömt das Gemisch aus Gas und Flüssigkeit in eine Art Mischstrecke durch das Gehäuse.

Gemäß einer Weiterbildung wird vorgeschlagen, dass das Gehäuse der Gas-Flüssigkeitsstrahldüse mindestens eine in die Gasaustrittsöffnung mündende Gas-Bohrung und mehrere Flüssigkeitskanäle sowie mindestens einen Gemisch-Austrittskanal für das Gemisch aus Flüssigkeit und Gas aufweist. Die Flüssigkeitskanäle sind bevorzugt gleichmäßig beabstandet an dem Gehäuse ausgebildet.

Die Durchmischung lässt sich ferner dadurch verbessern, dass der Gemisch-Austrittskanal der Gas-Flüssigkeitsstrahldüse einen als Diffusor ausgebildeten Abschnitt aufweist. Das Gemisch aus Gas und Flüssigkeit strömt durch den Diffusor hindurch. Dort wird kinetische Energie in Druckenergie umgewandelt. Zuvor wurde das ausströmende Gas in der Düse auf hohe Strömungsgeschwindigkeit beschleunigt. Strömt das Gas in Folge einer Gesamtdruckdifferenz zwischen einem Treibdruck und einem notwendigerweise niedrigeren Gegendruck durch die Gasleitung, eine Mischungszone und den Diffusor, so ergibt sich zwischen der Gasaustrittsöffnung und dem Anfang einer Mischstrecke eine Zone, in der bei hoher Geschwindigkeit ein statischer Druck herrscht, der erheblich niedriger als der Gegendruck und der Treibdruck. An dieser Stelle wird die anzusaugende zu mischende Flüssigkeit in die Gas-Flüssigkeitsstrahlpumpe eingelassen durch die Flüssigkeitskanäle. Der Treibstrom und die Flüssigkeit mischen sich, und durch Impulsaustausch wird ein Teil an der Saugstelle und kinetischen Energie vom Treibstrahl auf die angesaugte Flüssigkeit übertragen. Der gemischte Strom wird im Diffusor unter Druckgewinn bis zum Gegendruck verzögert, so dass sich vom Saugdruck bis zum Gegendruck eine Pumpwirkung ergibt. Nicht in der Flüssigkeit gelöstes Gas tritt gleichzeitig mit Flüssigkeit aus dem Diffusor aus und wird durch die relativ hohe Geschwindigkeit in die Flüssigkeit gewirbelt, so dass ein weiteres Lösen dieses Gases in der Flüssigkeit eintritt. Durch den Einsatz der erfindungsgemäßen Gas-Flüssigkeitsstrahldüse wird die Oberfläche der Flüssigkeit die Oberfläche oder die Phasengrenzfläche zwischen Flüssigkeit und Gas deutlich erhöht, so dass der Stoffaustausch verbessert ist.

Vorzugsweise sind die erste Gasquelle und die zweite Gasquelle jeweils als mit Gas, vorzugsweise Sauerstoff und Kohlendioxid befüllbare Druckbehälter ausgebildet und der erste und der zweite Druckbehälter mittels Haltevorrichtungen lösbar an der Vorrichtung befestigbar. Mittels solcher Haltevorrichtung lassen sich die Druckbehälter einfach befestigen und abnehmen.

Zur Steuerung der Gasströme und der Einleitungen in den Behälter weisen die Ventilmittel ein der ersten Gasquelle zugeordnetes mechanisch betätigbares erstes Ventil und ein der zweiten Gasquelle zugeordnetes mechanisch betätigbares zweites Ventil zur Gasentnahme auf.

Gemäß einer Weiterbildung wird vorgeschlagen, dass die Ventilmittel mindestens ein Betätigungselement aufweisen, mit dessen Hilfe bei an der Vorrichtung befestigten Druckbehältern wahlweise das erste oder zweite Ventil betätigt werden kann. Vorzugsweise ist das Betätigungselement axial bewegbar an der Vorrichtung gelagert und manuell betätigbar. Somit ist auf einfache Weise eine Betätigung der Ventile gewährleistet und zwar so, dass immer nur ein Ventil zur Zeit geöffnet werden kann, wie zuvor anhand des erfindungsgemäßen Verfahrens bereits erläutert wurde. Zu diesem Zweck ist das Betätigungselement bewegbar und derart zwischen einer ersten und zweiten Stellung verstellbar, das je nach Stellung des Betätigungselementes entweder nur das erste oder nur das zweite Ventil zur Gasentnahme betätigt wird.

Gemäß einer bevorzugten Weiterbildung wird vorgeschlagen, dass die Verstellung zwischen der ersten und der zweiten Stellung des Betätigungselementes durch Drehung erfolgt und ein Betätigungshebel des Betätigungselementes entweder mit dem ersten oder dem zweiten Ventil zusammenwirkt.

Eine Weiterbildung der Gas-Flüssigkeitsstrahldüse sieht vor, dass jede Gasquelle mittels je einer Leitung mit der Gas-Flüssigkeitsstrahldüse verbindbar ist und die Gas-Flüssigkeitsstrahldüse ein zentrales in die Gasaustrittsöffnung mündendes Gasrohr und ein weiteres konzentrisch zu dem Gasrohr angeordnetes Auslassrohr zum Ablassen von Gas aus dem Innenraum eines an der Vorrichtung befestigten Flüssigkeits-Behälters aufweist. Zum einfachen Ablassen weist das Auslassrohr mit dem Innenraum eines Flüssigkeits-Behälters kommunizierende Bohrungen auf.

Eine einfache Abdichtung allein aufgrund der Drücke in den Druckbehältern bzw. dem Flüssigkeits-Behälter ergibt sich dadurch, dass die Vorrichtung zur Aufnahme eines die Flüssigkeit enthaltenden Behälters eine elastisch verformbare Membran mit einem konischen Abdichtungsabschnitt aufweist, durch den das Gasrohr und Auslassrohr hindurchgeführt sind und der bei eingesetztem Flüssigkeits-Behälter abdichtend an diesen angepresst wird mittels des durch das Auslassrohr abgelassenen Gases.

Gemäß eines weiteren Aspektes wird die Aufgabe ferner gelöst durch eine Vorrichtung mit dem Merkmal des Anspruchs 23: Vorrichtung zum Erzeugen einer mit Gas angereicherten Flüssigkeit, insbesondere nach einem der vorstehenden Ansprüche und zur Durchführung des Verfahrens nach einem der vorstehenden Ansprüche, mit einer Gasquelle zum Bereitstellen eines unter Druck stehenden Gases, die als ein mit Gas befüllbarer Gas-Behälter ausgebildet ist; einer mit der Gasquelle druckdicht verbindbaren Vorrichtung zur Aufnahme eines die Flüssigkeit enthaltenden Behälters und zur Herstellung einer druckdichten Verbindung zwischen Gas-Behälter und Flüssigkeits-Behälter; einer Haltevorrichtung zur lösbaren Befestigung des Gas-Behälters, wobei der Behälter einen flanschartig vorstehenden Rand aufweist und der Behälter derart in die Haltevorrichtung einschiebbar ist, dass der Rand formschlüssig hintergreifend mit der Haltevorrichtung in Eingriff bringbar ist.

Durch eine derartige erfindungsgemäße Vorrichtung bei der eine einen vorstehenden Rand aufweisender Behälter formschlüssig in Eingriff mit der Haltevorrichtung kommt, lässt sich der Gas-Behälter einfach befestigen und entnehmen. Im Stand der Technik wurden hierzu Gewinde eingesetzt, die ein aufwendiges Verschrauben der Gas-Behälter notwendig machten. Hierauf wird erfindungsgemäß verzichtet und stattdessen wird der Rand formschlüssig mit einem Abschnitt der Haltevorrichtung in Eingriff gebracht. Versuche haben gezeigt, dass auch O₂ mit hohen Drücken zuverlässig an der Haltevorrichtung befestigt wird und eine gasdichte Verbindung besteht.

Gemäßeiner Weiterbildung wird vorgeschlagen, dass die Haltevorrichtung elastisch verformbare Spannabschnitte aufweist, die den Gas-Behälter im eingeschobenen Zustand in der Haltevorichtung einspannen. Die elastischen formbaren Spannabschnitte ermöglichen einerseits ein einfaches in Eingriffbringen und Einschieben der Gas-Behälter und sorgen im vollständig eingeschobenen Zustand gleichzeitig für eine Anpressung des Gas-Behälters an einen anderen Dicht-Abschnitt der Haltevorrichtung, so dass eine gasdichte Verbindung besteht und kein O₂ entweicht. Versuche haben gezeigt, dass auf diese Weise eine zuverlässige Abdichtung erreicht wird. Zweckmäßigerweise weisen die Spannabschnitte eine konvexe Kontaktfläche auf, mit der der Rand des Gas-Behälters in Kontakt bringbar ist, denn die als Gasflaschen ausgebildeten Druckbehälter lassen sich so einfach durch eine Schwenk- und Schiebbewegung befestigen.

Zur Aufrechterhaltung eines Drucks in dem Flüssigkeits-Behälter ist ein Druckhalteventil vorgesehen, das während und nach dem Einbringen eines Gases den Druck im Behälter konstant auf den eingestellten Druck hält. Dieses ist so ausgebildet, dass das Druckhalteventil bei Übersteigen des eingestellten Druckes im Behälter Gas aus dem Behälter in die Atmosphäre abgibt.

Aus Gründen der Betriebssicherheit ist ein Sicherheitsventil vorgesehen, welches bei Versagen des Druckhalteventils eintritt. Vorzugsweise ist die Öffnung des Gaseintrittes und des Flüssigkeitseintrittes der Gas-Flüssigkeitsstrahldüse bei gefülltem und eingesetzten Behälter unterhalb der Flüssigkeitsoberfläche angeordnet. Und somit ist eine doppelte Sicherheit gewährleistet, da bei Ausfall des Druckhalteventils das Sicherheitsventil bei Übersteigen eines voreingestellten Drucks öffnet.

Schließlich wird die Aufgabe gelöst bei einem Behälter gemäß den Merkmalen des Anspruchs 34. Hinsichtlich der diesbezüglichen Vorteile wird auf die obigen Beschreibungen Bezug genommen.

Die Erfindung ist nachstehend anhand bevorzugter Ausführungsbeispiele mit Bezug auf die beigefügten Zeichnungen beschrieben. Es zeigen:
- Figur 1: eine schematische Darstellung eines Ausführungsbeispiels einer Vorrichtung zum Erzeugen mit O₂ und CO₂ angereicherter Flüssigkeit mit einem erfindungsgemäßen Gas-Behälter;
- Figur 2: einen vergrößerten Ausschnitt aus Fig. 1;
- Figur 3: einen vergrößerten Ausschnitt aus Fig. 1, der eine erfindungsgemäße Haltevorrichtung und einen erfindungsgemäßen Behälter mit Rand veranschaulicht;
- Figur 4: eine Seitenansicht des in der Fig. 3 dargestellten Teile;
- Figur 5: einen erfindungsgemäßen Behälter während des Einschiebens in eine erfindungsgemäße Vorrichtung.

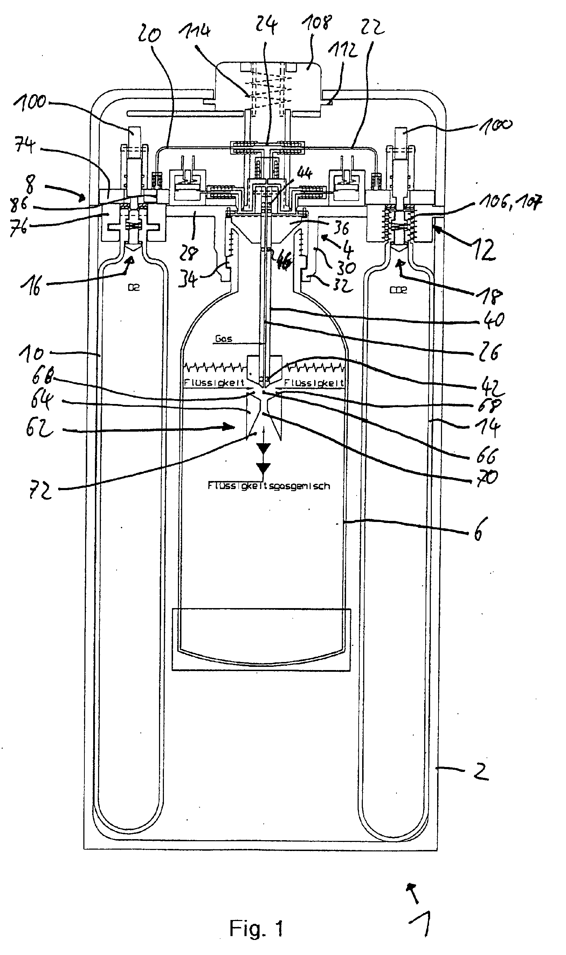

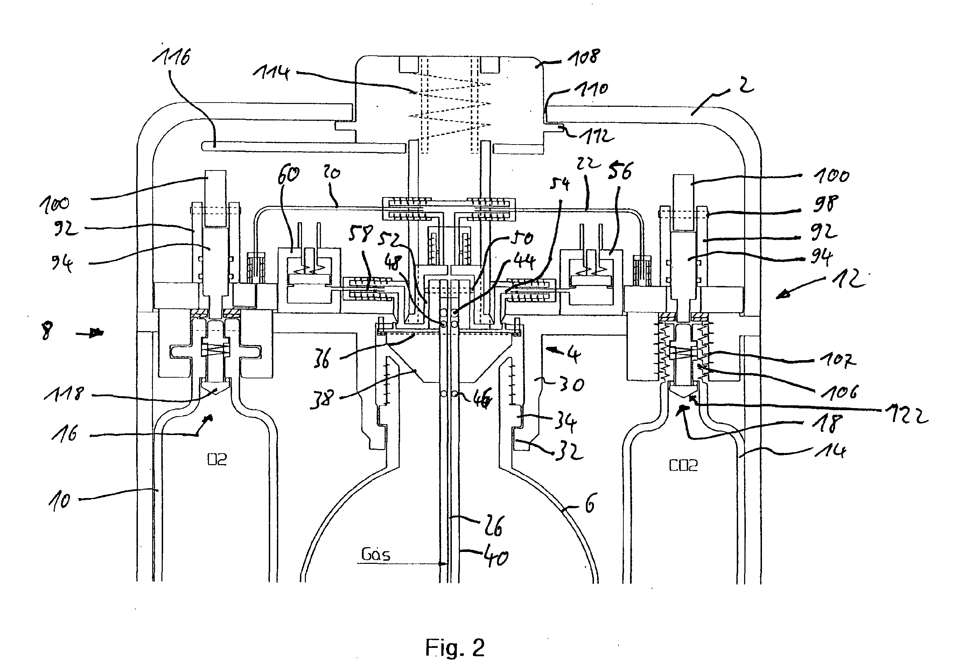

Wie aus den Figuren 1 und 2 ersichtlich ist, weist die erfindungsgemäße Vorrichtung 1 zum Erzeugen eines mit O₂ und/oder CO₂ angereicherten Getränks ein Gehäuse 2, eine an dem Gehäuse 2 gelagerte Vorrichtung 4 zur Aufnahme und Halterung eines die anzureichernde Flüssigkeit enthaltenen Behälters 6, eine erfindungsgemäße Haltevorrichtung 8 zur lösbaren Befestigung der als Gas-Druck-Behälter 10 ausgebildeten ersten Gasquelle sowie eine weitere Haltevorrichtung 12 zur lösbaren Befestigung einer als Druck-Gas-Behälters 14 ausgebildeten weiteren Gasquelle auf. Mit Hilfe von Ventilmitteln, die ein den Behälter 10 zugeordnetes Gas-Entnahme-Ventil 16 und ein weiteres, dem Behälter 14 zugeordnetes Gas-Entnahme-Ventil 18 umfassen, kann wahlweise O₂ oder CO₂ durch Leitungen 20, 22, ein T-Stück 24 und ein unten näher beschriebenes Gasrohr 26 in den Innenraum des Behälters 6 eingeleitet werden.

Die Vorrichtung weist eine an dem Gehäuse 2 gelagerte Grundplatte 28 und einen von dieser abstehenden rohrartigen Ansatz 30 auf, an welchem ein Bajonettverschluss 32 mit Vorsprüngen ausgebildet ist, die ihrerseits mit an dem Behälter 6 ausgebildeten Bajonettelementen 34 durch Drehen des Behälters 6 in bzw. außer Eingriff bringbar sind. An dem Behälter 6 ist ferner ein Gewinde ausgebildet, auf welches ein Deckel aufschraubbar ist (nicht dargestellt).

Eine beispielsweise aus Gummi bestehende elastisch verformbare Membran 36 mit einem konischen Abdichtungsabschnitt 38 (siehe Fig. 2), ist an ihrem äußeren Rand mittels Schrauben oder dgl. in gasdichter Weise mit der Grundplatte 28 verschraubt. Durch eine in der Membran 36 ausgebildete zentrale Bohrung ist das Gasrohr 26 und ein zu diesem konzentrisch angeordnetes Gas-Auslassrohr 40 hindurchgesteckt. Zwischen dem Auslassrohr 40 und dem Gasrohr 26 sind O-Ringe 42, 44 angeordnet, die für eine Lagerung und Abdichtung sorgen. Das Ablassrohr 40 ist fest mit der Membran 36 verbunden. Durch mit dem Innenraum des Flüssigkeits-Behälters 6 kommunizierende Bohrungen 44 kann Gas aus dem Innenraum des Behälters 6 durch das Ablassrohr 40 - nach oben - strömen in einen durch Bohrungen 48 in einen durch O-Ring 50 (Fig. 2) gasdicht verschlossenen Raum 52.

Raum 52 ist mittels Leitung 54 verbunden mit einem Druckhalteventil 56, welches derart einstellbar ist, dass es bei Überschreiten eines einstellbaren Drucks öffnet, so dass Gas an die Umgebung abgelassen werden kann und erreicht wird, dass in dem Innenraum des Behälters 6 ein durch Einstellung des Druckhalteventils bestimmter Druck in den Behälter 6 gehalten werden kann.

Raum 52 kommuniziert durch Leitung 58 mit einem Sicherheitsventil 60, welches ebenfalls derart einstellbar ist, dass bei Überschreiten eines bestimmten Drucks in dem Innenraum des Behälters 6 Gas an die Umgebung abgegeben wird. Ein zu hoher in dem Behälter 6 kann so vermieden werden. Der am Sicherheitsventil 60 eingestellte Druck ist höher als der am Druckhalteventil 56 eingestellte Druck.

Eine mit beiden Gasquellen druckdicht verbindbare Gas-Flüssigkeitsstrahldüse 62 weist ein an dem Ablassrohr 40 befestigtes Gehäuse auf Kunststoff auf und eine Gasaustrittsöffnung, die an dem unteren Endabschnitt des Gasrohrs 26 ausgebildet ist, so dass ein Gasstrahl mit hoher Strömungsgeschwindigkeit aus dem Gasrohr 26 austritt. In dem Gehäuse 64 der Flüssigkeitsstrahldüse ist eine Gas-Bohrung 66 und sind mehrere gleichmäßig über den Umfang des rotationssymetrischen Gehäuses 64 verteilte und schräg relativ zu einer Längsachse des Gasrohrs 26 und des Gehäuses 64 verlaufende Flüssigkeitskanäle 68 ausgebildet, in welche Flüssigkeit aufgrund der durch den Gasstrahl verursachten Druckverhältnisse eingesaugt wird, so dass es zu einer intensiven Vermischung von Gas und Flüssigkeit kommt und das Gemisch aus Gas und Flüssigkeit durch einen Gemisch-Austrittskanal 70 aus dem Gehäuse 64 austritt. Der Gemisch-Austrittskanal 70 weist einen als Diffusor 72 mit einem in Strömungsrichtung sich erweiternden Querschnitt auf, der für eine Verlangsamung des ausströmenden Gas/Flüssigkeits-Gemisches sorgt. Die Gas-Flüssigkeitsstrahldüse 62 steht insoweit in einer lösbaren Verbindung zu dem Behälter 6, als dass sie vollständig in den Innenraum des Behälters 6 einbringbar ist und im Wesentlichen unterhalb einer Flüssigkeitsoberfläche in dem Behälter 6 angeordnet ist und gleichzeitig durch Abnehmen des

Behälters von der Vorrichtung 4 vollständig aus dem Innenraum des Behälters 6 herausbringbar ist.

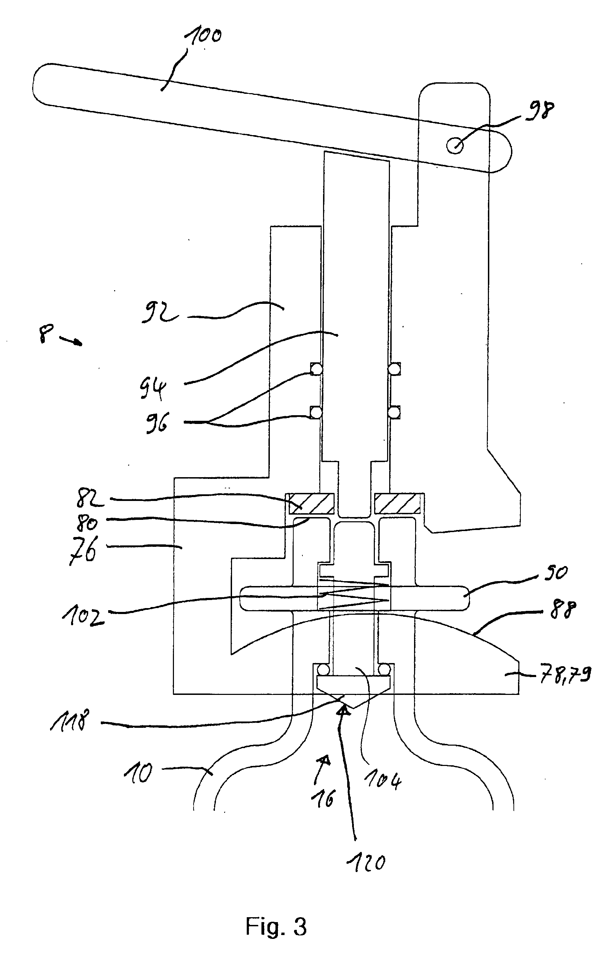

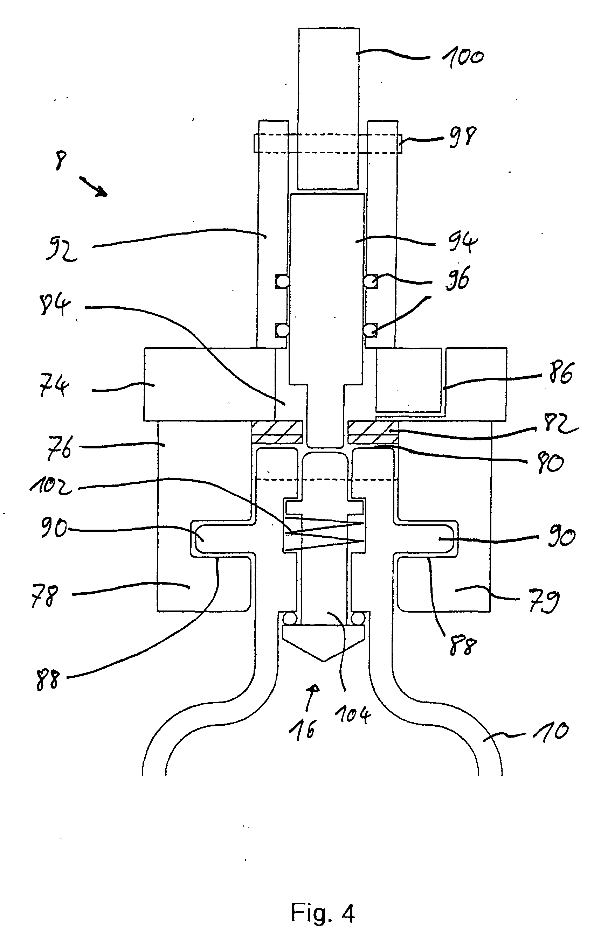

Die Haltevorrichtung 8 zur lösbaren Befestigung des O₂-Behälters 10 weist, wie auch den Figuren 3, 4 und 5 entnehmbar ist, eine mit der Grundplatte 28 verbundene Platte 74 sowie einen Grundkörper 76 auf. An dem Grundkörper 76 sind zwei beabstandete Spannabschnitte 78, 79 angeformt, die aus einem derartigen Material bestehen und so dimensioniert sind, dass sie elastisch formbar sind und im eingeschobenen Zustand (Figuren 3 und 4) des O₂-Behälters 10 in die Haltevorrichtung 8 derart einspannen, dass ein oberer Rand mit einer kreisförmigen Dichtfläche 80 des Behälters 10 gegen ein ringförmiges Dichtelement 82 vorgespannt wird, so dass eine gasdichte Verbindung zwischen Behälter und Haltevorrichtung 8 entsteht, so dass bei geöffnetem Ventil 16 Gas aus dem Behälter 10 ausströmen und in einen Raum 84, der in der Grundplatte 74 der Haltevorrichtung ausgebildet ist, einströmen kann und durch eine Bohrung 86 in Leitung 20 strömen kann.

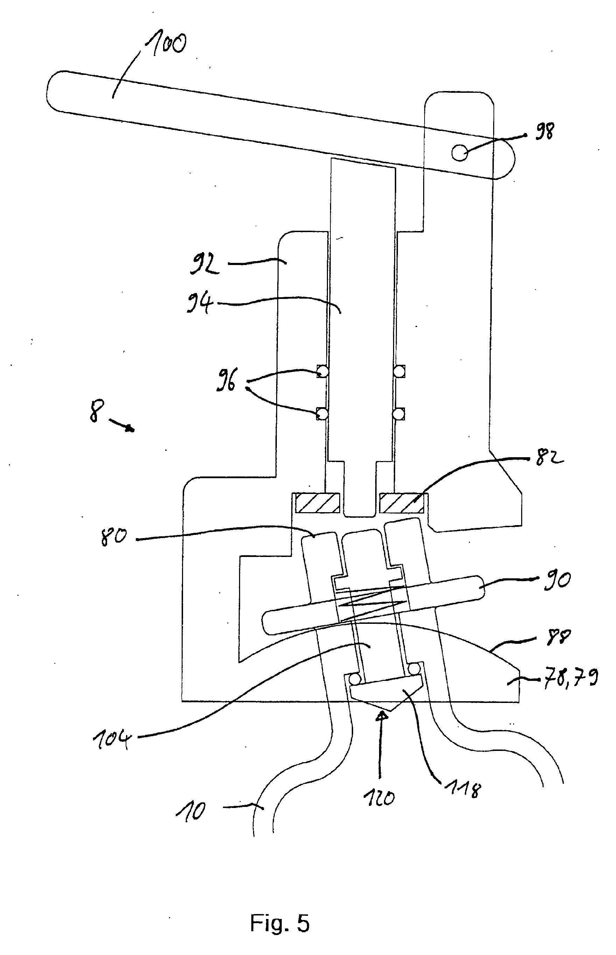

Die Spannabschnitte 78, 79 weisen, wie Figuren 3 und 5 zeigen, jeweils eine konvex geformte, vorzugsweise kreisförmig gekrümmte Kontaktfläche 88 auf, die mit einem flanschartigen, ringförmig von dem oberen Abschnitt der Flasche 10 abstehenden Rand 90 in Kontakt bringbar ist. Während des Einschiebens (Fig. 5) oder des Herausnehmens der Flasche 10 gleitet die Unterseite des Randes 90 auf den Kontaktflächen 88. Im vollständig eingeschobenem Zustand ist der Rand 90, wie Fig. 4 am Besten zeigt, formschlüssig hintergreifend in Eingriff mit den Spannabschnitten 78, 79, so dass die Flasche 10 sicher und gasdicht an der Haltevorrichtung 8 befestigt ist und abdichtend vorgespannt ist.

An einem im Wesentlichem rohrförmigen oberen Abschnitt 92 der Haltevorrichtung ist ein im Wesentlichem zylindrischer Betätigungs-Stift 94 gleitend und mittels O-Ringen 96 gasdicht abgedichtet axial bewegbar gelagert. Mittels eines verschwenkbar durch einen Stift 98 an dem Abschnitt 92 gelagerten Hebel 100 (siehe auch Fig. 1 und 2) kann der Stift 94 auf einen bewegbaren und mittels einer Spiralfeder 102 vorgespannten Ventilkörper 104 einwirken und dieser in die Öffnungsstellung gebracht werden.

Die Haltevorrichtung 12 für den CO₂-Behälter ist prinzipiell gleich ausgebildet wie die Haltevorrichtung 8, so dass voll umfänglich auf die obige Beschreibung Bezug genommen wird und die selben Bezugszeichen verwendet worden sind. Ein Unterschied besteht darin, dass der Behälter 14 ein Außengewinde 106 aufweist, welches mit einem Innengewinde 107 der Haltevorrichtung derart kooperiert, dass der Behälter 14 in die Haltevorrichtung 12 einschraubbar ist.

Ein in den Figuren 1 und 2 dargestelltes Betätigungselement 108 dient zum wahlweisen Betätigen des ersten Ventils 16 oder des zweiten Ventils 18 und zwar derart, dass nur eines der Ventile 16, 18 z. Zt. in die Öffnungsstellung gebracht werden kann. Das Betätigungselement 108 ist als manuell unterdrückbarer im Wesentlich zylindrischer Körper ausgebildet, der gleitend in einer Ausnehmung 110 des Gehäuses 102 gelagert ist und mittels eines ringförmig umlaufenden Randes 112 gesichert ist. Mittels einer Spiralfeder 114 wird das Betätigungselement - nach oben - derart vorgespannt, dass der Rand 112 an dem Gehäuse 2 anliegt. Ein länglicher, einseitig von dem Betätigungselement 108 abstehender Betätigungshebel 116 ist an dem Betätigungselement 108 befestigt und kann zusammen mit diesem durch Drehung des Betätigungselements 108 aus einer in Fig. 2 gezeigten ersten Stellung, in welcher bei manuellem Herunterdrücken des Betätigungselementes 108 der Betätigungshebel 116 derart mit dem Hebel 100 zusammenwirkt, dass das Ventil 16 in die Öffnungsstellung gebracht wird, in eine weitere Stellung gedreht werden, in welcher in nicht dargestellter Weise der Betätigungshebel 116 bei Herunterdrücken des Betätigungshebels 108 derart mit dem Hebel 100 der Haltevorrichtung 12 zusammenwirkt, dass das Ventil 18 des Behälters 14 für CO₂ in die Öffnungsstellung gelangt, so dass CO₂ in den Behälter 6 einleitbar ist. Es ist somit gewährleistet, dass nur ein Ventil 16 oder 18 zur Zeit durch Betätigung des Betätigungselementes 108 in die Öffnungsstellung gebracht werden kann, so dass stets entweder O₂ oder CO₂ durch Gasrohr 26 in den Innenraum des Behälters 6 einströmt. Die selbe Wirkung ließe sich ggf. durch eine elektronische Schaltung realisieren bei einer alternativen Vorrichtung, bei der die Ventile 16, 18 automatisch betätigt werden, beispielsweise mit Hilfe von pneumatischen Zylindern, die derart angeordnet sind, dass sie mit den Hebeln 100 zusammenwirken.

Im nicht dargestellter Weise weist der Ventilkegel 118 (siehe Fig. 3) des Ventilkörpers 104 eine dem Innenraum des Behälters 10 zugewandte Fläche 120 auf, die kleiner ist als die entsprechende Fläche 122 des Ventilkegels des Ventils 18 des CO₂-Behälters 14. Die kleinere Fläche 120, bewirkt, dass bei höherem Druck in dem O₂-Behälter 10 gegenüber dem Druck in dem CO₂-Behälter 14 stets die gleiche manuelle Kraft auf das Betätigungselement 108 aufgebracht werden muss zum Öffnen des Ventils 16, da aufgrund der kleineren Fläche 120 eine geringe Kraft von dem O₂ in dem Behälter 10 aufgebracht wird.

Mit Hilfe der erfindungsgemäßen Vorrichtung und dem erfindungsgemäßen Verfahren kann mit Sauerstoff und Kohlendioxid oder anderen unterschiedlichen Gasen aus unterschiedlichen Gasquellen angereicherte Getränke vorzugsweise Wasser oder Fruchtsäfte hergestellt werden.

Das erfindungsgemäße Verfahren zeichnet sich unter anderem dadurch aus, dass zunächst Flüssigkeit in den Behälter 6 eingebracht wird und dann der Behälter 6 an der Vorrichtung 4 befestigt wird, dann nachdem die Behälter 10 bwz. 14 an den Haltevorrichtungen 8 bzw. 12 befestigt worden sind, die Betätigung des Betätigungselementes 108 eine Verbindung zunächst des Behälters 10 mit dem Behälter 6 hergestellt wird, das Ventil 16 geöffnet wird und O₂ durch das Gasrohr 26 einströmt. Anschließend wird das Betätigungselement 108 um etwa 180 Grad gedreht, so dass dann durch Herunterdrücken des Betätigungselementes 108 der Betätigungshebel 116 mit dem Hebel 100 der Haltevorrichtung 12 zum Öffnen des Ventils 18 zusammenwirkt, so dass dann, während das Ventil 16 geschlossen ist, das Ventil 18 öffnet und CO₂ aus dem Behälter 14 in den Behälter 6, in dem die Flüssigkeit enthalten ist, hineinströmt und dann durch die Düse 62, die in der Flüssigkeit angeordnet ist, so dass es zu einer intensiven Vermischung kommt. Anschließend wird die angereicherte Flüssigkeit zusammen mit dem Behälter 6 durch Lösen von der Vorrichtung 4 aus der Vorrichtung 1 entnommen. Während des Einströmens von O₂ oder CO₂ ist die Membran 26 mit dem konischen Abschnitt 38 in Kontakt mit dem oberen Rand des Behälters 6. Durch die Bohrungen 46 strömt Gas aus dem Innenraum des Behälters 6 durch das Ablassrohr 40 und durch die Bohrungen 48 in den Raum 52, so dass durch den Druck auf die obere Wirkfläche der Membran 36, die größer ist als die untere Wirkfläche im Innenraum des Behälters 6 die Membran 36 nach unten gedrückt wird zusammen mit dem Gasrohr 26 und dem Ablassrohr 40, so dass dann Gas aus dem Raum 52 durch Leitung 54 in das Druckhalteventil 56 einströmt, so dass in dem Innenraum des Ventils 6 stets ein einstellbarer Druck herrscht. Nachdem das erste Gas eingeleitet worden ist, bleibt der Druck in dem Behälter 6 voll aufrechterhalten. Anschließend wird das andere Gas auf die zuvor beschriebene Weise in den Behälter 6 eingeleitet. Die Behälter 10 bzw. 14 können zum wiederholten Befüllen von den Haltevorrichtungen 8 bzw. 12 vollständig entnommen werden und dann erneut befüllt und anschließend wieder an der Vorrichtung 1 befestigt werden.

## Patentansprüche

1. Verfahren zum Erzeugen einer mit Gas angereicherten Flüssigkeit, insbesondere eines mit Kohlensäure und Sauerstoff angereicherten Getränks, mit folgenden Schritten:
Einbringen der Flüssigkeit in einen Behälter:
druckdichtes Verbinden des Behälters mit zwei Gasquellen;
Einbringen der unter Druck stehenden Gase in den Behälter; und
Vermischen der Flüssigkeit mit den Gasen im Behälter.

2. Verfahren nach Anspruch 1,
**dadurch gekennzeichnet, dass** zunächst aus einer ersten, als Druckbehälter ausgebildete Gasquelle Sauerstoff in den Flüssigkeits-Behälter eingebracht wird und anschließend aus einem als Druckbehälter ausgebildeten Gasquelle Kohlensäure in den Behälter eingeleitet wird.

3. Verfahren nach Anspruch 1 oder 2,
**dadurch gekennzeichnet, dass** die Gase mittels einer Gas-Flüssigkeitsstrahldüse unmittelbar in die in dem Behälter befindliche Flüssigkeit eingeleitet werden.

4. Verfahren nach einem der vorstehenden Ansprüche,
**dadurch gekennzeichnet, dass** zunächst das erste Gas unter Druck in den Behälter eingeleitet wird, dann der Druck in dem Behälter aufrecht erhalten bleibt und im Anschluss hieran das zweite Gas unter Druck in dem Behälter eingeleitet wird.

5. Verfahren nach einem der vorstehenden Ansprüche,
**dadurch gekennzeichnet, dass** der Druck im Behälter solange bestehen bleibt, bis ein mechanisches Entlastungsventil betätigt wird.

6. Verfahren nach Anspruch 5,
**dadurch gekennzeichnet, dass** der Behälter erst nach Betätigung des mechanischen Entlastungsventils und somit einen Druckausgleich gegenüber der Umgebung entnommen werden kann.

7. Verfahren nach einem der vorstehenden Ansprüche,
**dadurch gekennzeichnet, dass** die Flüssigkeit Trinkwasser, Fruchtsaft oder dgl. ist und Sauerstoff und Kohlensäure eingeleitet werden, so dass sich diese in dem Wasser oder Fruchtsaft lösen.

8. Verfahren nach einem der vorstehenden Ansprüche,
**dadurch gekennzeichnet, dass** ein Druckbehälter mit Sauerstoff gefüllt wird und ein weiterer Druckbehälter mit Kohlensäure gefüllt wird, beide gefüllten Druckbehälter an einer Vorrichtung zum Herstellen eines mit Kohlensäure und Sauerstoff anzureichernden Getränkes befestigt werden, zunächst Sauerstoff aus dem Druckbehälter in einen an der Vorrichtung befestigten Behälter unter Druck eingeleitet wird, anschließend durch Betätigung von Ventilmitteln Kohlensäure in den unter Druck stehenden Behälter eingeleitet wird, so dass sich Sauerstoff und Kohlensäure in der Flüssigkeit lösen, und anschließend der Behälter von der Vorrichtung entnommen wird und nach Entleeren der Druckbehälter diese von der Vorrichtung entnommen werden und erneut mit Sauerstoff bzw. Kohlensäure befüllt werden.

9. Vorrichtung zum Erzeugen einer mit Gas angereicherten Flüssigkeit, insbesondere eines mit Kohlensäure und Sauerstoff angereicherten Getränks und zur Durchführung eines Verfahrens nach einem der vorstehenden Ansprüche,
mit einer Gasquelle zum Bereitstellen eines unter Druck stehenden Gases;
einer mit der Gasquelle druckdicht verbindbaren Vorrichtung (4) zur Aufnahme eines die Flüssigkeit enthaltenden Behälters (6); und
mit einer weiteren Gasquelle für ein weiteres Gas vorgesehen ist, die druckdicht mit der Vorrichtung (4) zur Aufnahme des die Flüssigkeit enthaltenden Behälters verbindbar ist,
und mit Ventilmitteln (16, 18) wahlweise aus der einen Gasquelle und/oder der weiteren Gasquelle Gas in den Behälter (6) einleitbar ist.

10. Vorrichtung zum Erzeugen einer mit Gas angereicherten Flüssigkeit, insbesondere eines mit Kohlensäure und Sauerstoff angereicherten Getränks und zur Durchführung eines Verfahrens nach einem der vorstehenden Ansprüche,
mit einer Gasquelle zum Bereitstellen eines unter Druck stehenden Gases;
einer mit der Gasquelle druckdicht verbindbaren Vorrichtung zur Aufnahme eines die Flüssigkeit enthaltenden Behälters; und
einer mit der Gasquelle verbindbaren Gas-Flüssigkeitsstrahldüse (62), welche eine Gasaustrittsöffnung, aus der ein Gastrahl austritt, und ein Gehäuse (64) aufweist, in dem mindestens ein Flüssigkeitskanal ausgebildet ist, in welchen die Flüssigkeit aufgrund des Gasstrahls eingesaugt wird, so dass das Gas mit der Flüssigkeit vermischt wird.

11. Vorrichtung nach Anspruch 10,
**dadurch gekennzeichnet, dass** das Gehäuse (64) der Gas-Flüssigkeitsstrahldüse (62) mindestens eine in die Gasaustrittsöffnung mündende Gas-Bohrung (66) und mehrere Flüssigkeitskanäle (68) sowie mindestens einen Gemisch-Austrittskanal (70) für das Gemisch aus Flüssigkeit und Gas aufweist.

12. Vorrichtung nach Anspruch 11,
**dadurch gekennzeichnet, dass** der Gemisch-Austrittskanal (70) der Gas-Flüssigkeitsstrahldüse (62) einen als Diffusor (70) ausgebildeten Abschnitt aufweist.

13. Vorrichtung nach einem der Ansprüche 10 bis 12,
**dadurch gekennzeichnet, dass** die Gas-Flüssigkeitsstrahidüse (62) eine mit dem Behälter (6) lösbare Verbindung aufweist und im Betrieb im wesentlichen im Innenraum des Flüssigkeits-Behälters angeordnet ist.

14. Vorrichtung nach einem der vorstehenden Ansprüche,
**dadurch gekennzeichnet, dass** die erste Gasquelle und die zweite Gasquelle jeweils als mit Gas, vorzugsweise Sauerstoff und Kohlendioxid befüllbare Druckbehälter ausgebildet sind und dass der erste und der zweite Druckbehälter mittels Haltevorrichtungen (8, 12) lösbar an der Vorrichtung (1) befestigbar sind.

15. Vorrichtung nach einem der vorstehenden Ansprüche,
**dadurch gekennzeichnet, dass** die Ventilmittel ein der ersten Gasquelle zugeordnetes mechanisch betätigbares erstes Ventil (16) und ein der zweiten Gasquelle zugeordnetes mechanisch betätigbares zweites Ventil (18) zur Gasentnahme aufweisen.

16. Vorrichtung nach einem der vorstehenden Ansprüche,
**dadurch gekennzeichnet, dass** die Ventilmittel mindestens ein Betätigungselement (108) aufweisen, mit dessen Hilfe bei an der Vorrichtung befestigten Druckbehältern wahlweise das erste oder zweite Ventil betätigt werden kann.

17. Vorrichtung nach Anspruch 16,
**dadurch gekennzeichnet, dass** das Betätigungselement (108) axial bewegbar an der Vorrichtung (1) gelagert und manuell betätigbar ist.

18. Vorrichtung nach Anspruch 16 oder 17,
**dadurch gekennzeichnet, dass** das Betätigungselement (108) bewegbar und derart zwischen einer ersten und zweiten Stellung verstellbar und ist, das je nach Stellung des Betätigungselementes entweder nur das erste oder nur das zweite Ventil (16, 18) zur Gasentnahme betätigt wird.

19. Vorrichtung nach Anspruch 18,
**dadurch gekennzeichnet, dass** die Verstellung zwischen der ersten und der zweiten Stellung des Betätigungselementes durch Drehung erfolgt und ein Betätigungshebel (116) des Betätigungselementes (108) entweder mit dem ersten oder dem zweiten Ventil (16, 18) zusammenwirkt.

20. Vorrichtung nach einem der vorstehenden Ansprüche,
**dadurch gekennzeichnet, dass** jede Gasquelle mittels je einer Leitung (20, 22) mit der Gas-Flüssigkeitsstrahldüse (62) verbindbar ist und die Gas-Flüssigkeitsstrahldüse ein zentrales in die Gasaustrittsöffnung mündendes Gasrohr (26) und ein weiteres konzentrisch zu dem Gasrohr angeordnetes Auslassrohr (40) zum Ablassen von Gas aus dem Innenraum eines an der Vorrichtung befestigten Flüssigkeits-Behälters aufweist.

21. Vorrichtung nach Anspruch 20,
**dadurch gekennzeichnet, dass** das Auslassrohr (40) mit dem Innenraum eines Flüssigkeits-Behälters kommunizierende Bohrungen (46) aufweist.

22. Vorrichtung nach einem der vorstehenden Ansprüche,
**dadurch gekennzeichnet, dass** die Vorrichtung zur Aufnahme eines die Flüssigkeit enthaltenden Behälters eine elastisch verformbare Membran (36) mit einem konischen Abdichtungsabschnitt aufweist, durch den das Gasrohr und Auslassrohr (40) hindurchgeführt sind und der bei eingesetztem Flüssigkeits-Behälter abdichtend an diesen angepreßt wird mittes des durch das Auslassrohr (40) abgelassenen Gases.

23. Vorrichtung zum Erzeugen einer mit Gas angereicherten Flüssigkeit, insbesondere nach einem der vorstehenden Ansprüche und zur Durchführung des Verfahrens nach einem der vorstehenden Ansprüche,
mit einer Gasquelle zum Bereitstellen eines unter Druck stehenden Gases, die als ein mit Gas befüllbarer Gas-Behälter ausgebildet ist;
einer mit der Gasquelle druckdicht verbindbaren Vorrichtung (4) zur Aufnahme eines die Flüssigkeit enthaltenden Behälters (6) und zur Herstellung einer druckdichten Verbindung zwischen Gas-Behälter und Flüssigkeits-Behälter;
einer Haltevorrichtung (8) zur lösbaren Befestigung des Gas-Behälters (10),
wobei der Behälter einen flanschartig vorstehenden Rand aufweist und der Behälter derart in die Haltevorrichtung einschiebbar ist, dass der Rand formschlüssig hintergreifend mit der Haltevorrichtung in Eingriff bringbar ist.

24. Vorrichtung nach Anspruch 23,
**dadurch gekennzeichnet, dass** die Haltevorrichtung (8) elastisch verformbare Spannabschnitte (78, 79) aufweist, die den Gas-Behälter im eingeschobenen Zustand in der Haltevorrichtung (8) einspannen.

25. Vorrichtung nach Anspruch 24,
**dadurch gekennzeichnet, dass** der Gas-Behälter mittels der Spannabschnitte gegen ein Dichtelement der Haltevorrichtung vorgespannt wird, so dass eine im wesentliche gasdichte Verbindung zwischen Gas-Behälter und Haltevorrichtung (8) entsteht.

26. Vorrichtung nach Anspruch 25,
**dadurch gekennzeichnet, dass** die Spannabschnitte eine konvexe Kontaktfläche (88) aufweisen, mit der der Rand (90) des Gas-Behälters in Kontakt bringbar ist.

27. Vorrichtung nach einem der vorstehenden Ansprüche,
**dadurch gekennzeichnet, dass** ein Druckhalteventil (56) vorgesehen ist, das während und nach dem Einbringen eines Gases den Druck im Behälter (6) konstant auf den eingestellten Druck hält.

28. Vorrichtung nach Anspruch 27,
**dadurch gekennzeichnet, dass** das Druckhalteventil bei Übersteigen des eingestellten Druckes im Behälter Gas aus dem Behälter in die Atmosphäre abgibt.

29. Vorrichtung nach einem der vorstehenden Ansprüche,
**dadurch gekennzeichnet, dass** ein Sicherheitsventil (60) vorgesehen ist.

30. Vorrichtung nach Anspruch 29,
**dadurch gekennzeichnet, dass** das Sicherheitsventil bei Versagen des Druckhalteventils den Überdruck im Behälter an die Atmosphäre abgibt.

31. Vorrichtung nach Anspruch 30,
**dadurch gekennzeichnet, dass** der eingestellte Druck am Sicherheitsventil höher als der am Druckhalteventil ist.

32. Vorrichtung nach einem der vorstehenden Ansprüche,
**dadurch gekennzeichnet, dass** die Öffnung des Gaseintrittes und des Flüssigkeitseintrittes der Gas-Flüssigkeitsstrahldüse bei gefülltem und eingesetzten Behälter unterhalb der Flüssigkeitsoberfläche angeordnet ist.

33. Vorrichtung nach einem der vorstehenden Ansprüche,
**dadurch gekennzeichnet, dass** ein Ventilkegel des Gasentnahme-Ventils im Sauerstoff-Druckbehälter eine kleinere Fläche zum Flaschendruck aufweist als der Ventilkegel im Gasentnahme-Ventil des Kohlensäure-Druckbehälter.

34. Mit Gas befüllbarer Behälter,
**dadurch gekennzeichnet, daß** der Behälter einen flanschartig vorstehenden Rand aufweist, der durch Einschieben des Behälters in eine Haltevorrichtung formschlüssig hintergreifend mit dieser in Eingriff bringbar ist.

35. Mit Sauerstoff und Kohlendioxid angereichertes Getränk.

36. Mit Sauerstoff und Kohlendioxid angereichertes Wasser.

37. Verwendung eines mit Sauerstoff unter Druck gefüllten Behälters in einem Verfahren und/oder einer Vorrichtung nach einem der vorstehenden Ansprüche.
